# EUROPEAN PATENT APPLICATION

(11) **EP 2 309 519 A1**
(43) Date of publication of application: **13.04.2011**
(21) Application number: 09802903.6
(22) Date of filing: 27.07.2009
(51) Int. Cl.: H01B 1/20, C09D 4/00, C09D 5/24, C09D 7/12, C09D 163/10, C09D 179/02, C09D 181/00, H01B 5/14

(54) **CONDUCTIVE COATING COMPOSITION**

(30) Priority: 29.07.2008 JP 2008194686
(71) Applicant: Nissan Chemical Industries, Ltd., Chiyoda-ku Tokyo 101-0054 (JP)
(72) Inventor: ISAJI Tadayuki, Funabashi-shi Chiba 274-8507 (JP); SUEMURA Naohiko, Sodegaura-shi Chiba 299-0266 (JP); MITSUI Shigeru, Funabashi-shi Chiba 274-8507 (JP)
(74) Representative: Stuart, Ian Alexander
(86) International application number: PCT/JP2009/063328
(87) International publication number: WO 2010/013660

(57) **Abstract**

Disclosed is a conductive coating composition containing an organic solvent dispersion of an intrinsically conductive polymer such as a doped polyaniline or a doped polythiophene, and a binder. The conductive coating composition is **characterized in that** the binder contains a polymerizable monomer-dispersed silica sol, which is obtained by dispersing a colloidal silica into a polymerizable organic compound monomer. The composition provides a conductive thin film having high transparency and excellent strength.

## Description

### TECHNICAL FIELD

The present invention relates to a conductive coating composition and, more particularly, to a conductive coating composition containing a dispersion of an intrinsically conductive polymer in an organic solvent as well as a binder.

### BACKGROUND ART

There are growing expectations for new uses of aromatic conductive polymers, such as polyaniline, polythiophene, and polypyrrole, on account of their outstanding stability and electrical conductivity.
Unfortunately, these conductive polymers are insoluble in any solvent and hence poor in moldability. Consequently, they have been limited in the field of their application.

It has recently been reported that improvement in moldability is possible if the conductive polymer in the form of fine particles is dispersed in water or organic solvent, such as aromatic solvent (See Patent Documents 1 and 2).
The above-mentioned conductive polymer is made into a dispersion of an intrinsically conductive polymer by incorporation with a dopant, and the resulting product is usually used in the form of an aqueous colloid dispersion or a dispersion in a mixed solvent of water and hydrophilic solvent. Preparation of the dispersion to be used as a coating agent involves problems with complicated solvent composition. Thus, conductive polymers are still limited in the field of their application.

There have been developed some new ways to tackle these problems by replacing the solvent by the other one by the solvent replacement method (See Patent Documents 3 and 4).
Unfortunately, the method disclosed in Patent Document 3 needs very complicated steps for forced stirring during solvent replacement.
A simpler method has also been reported which involves solvent replacement to be performed after deionization with an ion exchange substance. This method, however, suffers the disadvantage of being incapable of removing cations which have firmly stuck to the surface of the intrinsically conductive polymer. Owing to residual cations, the intrinsically conductive polymer is poor in dispersion stability in an organic solvent. And this presents difficulties in reducing the water content below 1 wt% (See Patent Document 4).

The present inventors found that the foregoing problems can be solved if the aqueous colloid dispersion of the intrinsically conductive polymer is deionized (by solution passing) and then undergoes solvent replacement. This method permits the intrinsically conductive polymer to be dispersed into an organic solvent (See Patent Documents 5 and 6).

In the meantime, the intrinsically conductive polymer in the form of thin film has recently come into use as antistatic film for clear plastic products or as transparent electrodes on the plastic substrate.
The thin film in these uses is required to exhibit high strength without impairing the transparency of the substrate. Thus there is a demand for thin film of intrinsically conductive polymer which has high transparency as well as high strength.

With respect to the foregoing, the present inventors have reported that it is possible to obtain a coating composition with a simple solvent composition by a simple process and to obtain a highly transparent and highly strong film of intrinsically conductive polymer, if a dispersion of the intrinsically conductive polymer in an organic solvent is combined with a variety of binders (See Patent Document 7). There still is room for improvement in its characteristic properties.

### PRIOR-ART DOCUMENTS

### PATENT DOCUMENTS

Patent Document 1: JP-A H7-90060
Patent Document 2: JP-T H2-500918
Patent Document 3: JP-T 2004-532292
Patent Document 4: JP-T 2004-532298
Patent Document 5: WO 2006/087969
Patent Document 6: WO 2007/052852
Patent Document 7: JP-A 2007-324142

### SUMMARY OF THE INVENTION

### PROBLEMS TO BE SOLVED BY THE INVENTION

The present invention was completed in view of the foregoing. It is an object of the present invention to provide a conductive coating composition which gives a conductive thin film superior in transparency and strength.

### MEANS FOR SOLVING THE PROBLEMS

In an attempt to address the foregoing problems, the present inventors carried out a series of researches, which led to a finding that an aqueous dispersion of an intrinsically conductive polymer incorporated with a binder, which is silica sol dispersed in a polymerizable monomer, functions as a conductive coating composition which gives a thin film superior to conventional ones in transparency and strength. The present invention is based on this finding.

The present invention covers the following.
1. A conductive coating composition which includes a dispersion of an intrinsically conductive polymer in an organic solvent and a binder, wherein the binder contains colloidal silica in the form of sol in a polymerizable monomer of organic compound.
2. The conductive coating composition as defined in Paragraph 1 above, wherein the monomer of organic compound is at least one species selected from the group consisting of polymerizable compounds having ethylenic unsaturated bonds, polymerizable compounds having epoxy rings, polymerizable compounds having oxetane rings, and polymerizable compounds having vinyl ether structure.
3. The conductive coating composition as defined in Paragraph 1 or 2 above, wherein the dispersion in an organic solvent has a water content no more than 1 wt%.
4. The conductive coating composition as defined in any of Paragraphs 1 to 3 above, wherein the intrinsically conductive polymer contains aniline units at the least.
5. The conductive coating composition as defined in any of Paragraphs 1 to 4 above, wherein the intrinsically conductive polymer is polyaniline or a mixture or copolymer of polyaniline and polythiophene.
6. A member which includes a substrate and a coating film formed thereon from the conductive coating composition defined in any of Paragraphs 1 to 5 above.
7. The member as defined in Paragraph 6 above, wherein the substrate is one which is made of plastics, rubber, glass, metal, ceramics, or paper.

### ADVANTAGEOUS EFFECT OF THE INVENTION

The conductive coating composition according to the present invention employs a solvent of simple composition and yields a film easily.
The conductive coating composition gives rise to a conductive thin film which excels in transparency and strength. The conductive thin film imparts electrical conductivity and antistatic property to a component without impairing the transparency of its substrate.
The conductive thin film will find use in various fields as a transparent electrode material, transparent antistatic agent, UV light absorber, heat radiation absorber, electromagnetic wave absorber, sensor, electrolyte for electrolytic condenser, and electrode for secondary battery.

### EMBODIMENT FOR CARRYING OUT THE INVENTION

The following is a detailed description of the invention.
The conductive coating composition according to the present invention contains a dispersion of an intrinsically conductive polymer in an organic solvent and a binder.
The term "intrinsically conductive polymer" (abbreviated as ICP) denotes a polymer which is doped by a dopant and which has the polyradical cationic salt or polyradical anionic salt so that it exhibits electrical conductivity by itself.

The intrinsically conductive polymer suitable for the present invention is not specifically restricted. It includes, for example, a variety of known doped polymers formed from aniline, pyrrole, thiophene, or acetylene or derivatives thereof. These polymers may be used alone or in combination with one another after mixing. At least a portion of them should preferably be a polymer containing aniline units. In addition, these polymers may be doped with a sulfonic compound (such as polystyrenesulfonic acid, methanesulfonic acid, alkylbenzenesulfonic acid, and camphorsulfonic acid), carboxylic compound (such as acetic acid), and hydrogen halide (such as hydrochloric acid and hydrobromic acid).

Preferable among these conductive polymers are polythiophene (specifically poly(3,4-ethylene)dioxythiophene) and polyaniline and their mixture or copolymer, which can be produced by the method disclosed in JP-A H7-90060 and JP-T H2-500918 or which are commercially available in the form of aqueous colloid dispersion. The most desirable one is polyaniline or a mixture or copolymer of polyaniline and polythiophene, which is available in the form of aqueous colloid dispersion with an extremely small particle size.
The dispersion of the intrinsically conductive polymer in an organic solvent can be obtained by the methods disclosed in Patent Documents 5 and 6 listed above which are intended to substitute an organic solvent for water in the aqueous colloid dispersion.
The dispersion of the intrinsically conductive polymer in an organic solvent should preferably be one which has a water content no more than 1 wt%. Most desirable for the conductive coating composition to keep good storage stability is that of polyaniline or a mixture or copolymer of polyaniline and polythiophene.

The coating composition according to the present invention contains a binder, which is composed of a polymerizable monomer of organic compound and colloidal silica particles uniformly dispersed therein. The polymerizable monomer is one capable of polymerization upon irradiation with high-energy rays (such as UV light, electron rays, γ-rays, and X-rays), upon heating, or upon reaction with a catalyst or hardener.
The polymerizable monomer of organic compound is not specifically restricted so long as it is capable of polymerization by any one of the foregoing methods. Preferable one according to the present invention is at least one species selected from the group consisting of polymerizable compounds having ethylenic unsaturated bonds, polymerizable compounds having epoxy rings, polymerizable compounds having oxetane rings, and polymerizable compounds having vinyl ether structure.

Examples of the polymerizable compounds having ethylenic unsaturated bonds include unsaturated carboxylic acid compounds, such as acrylic acid, methacrylic acid, itaconic acid, crotonic acid, maleic acid, and phthalic acid.
Moreover, these unsaturated carboxylic acid compounds may be replaced by their ester compounds or amide compounds resulting from their reaction with alcohol compound or amine compound, respectively. Examples of such ester compounds and amide compounds include acrylic ester compound, methacrylic ester compound, itaconic ester compound, crotonic ester compound, maleic ester compound, phthalic ester compound, acrylic acid amide compound, methacrylic acid amide compound, itaconic acid amide compound, crotonic acid amide compound, maleic acid amide compound, and phthalic acid amide compound.

The alcohol compound mentioned above is not specifically restricted. It includes, for example, polyol compounds having 2 to 6 hydroxyl groups, such as ethylene glycol, triethylene glycol, tetraethylene glycol, tris(2-hydroxyethyl)isocyanuric acid, triethanolamine, and pentaerythritol.
The amine compound mentioned above is not specifically restricted. It includes, for example, polyamines having 2 to 6 primary or secondary amino groups, such as ethylene diamine, diaminocyclohexane, diaminonaphthalene, 1,4-bis(aminomethyl)cyclohexane, 3,3',4,4'-tetraaminobiphenyl, and tris(2-aminoethyl)amine.

The polymerizable compounds having ethylenic unsaturated bonds are listed below, for example.
Ethylene glycol di(meth)acrylate,
diethylene glycol di(meth)acrylate,
triethylene glycol di(meth)acrylate,
tetraethylene glycol di(meth)acrylate,
nonaethylene glycol di(meth)acrylate,
polyethylene glycol di(meth)acrylate,
tripropylene glycol di(meth)acrylate,
tetrapropylene glycol di(meth)acrylate,
nonapropylene glycol di(meth)acrylate,
polypropylene glycol di(meth)acrylate,
2,2-bis[4-((meth)acryloxydiethoxy)phenyl]propane,
3-phenoxy-2-propanoylacrylate,
1,6-bis(3-acryloxy-2-hydroxypropyl)-hexylether,
trimethylolpropane tri(meth)acrylate,
glycerol tri(meth)acrylate,
tris(2-hydroxyethyl)-isocyanuric ester (meth)acrylate,
pentaerythritol tri(meth)acrylate,
pentaerythritol tetra(meth)acrylate,
dipentaerythritol tri(meth)acrylate,
dipentaerythritol penta(meth)acrylate,
dipentaerythritol hexa(meth)acrylate,
tripentaerythritol octa(meth)acrylate,
tripentaerythritol hepta(meth)acrylate,
2-hydroxypropyl (meth)acrylate, 2-ethylhexyl (meth)acrylate, 2-norbornylmethyl methacrylate,
2-hydroxypropyl-3-phenoxypropyl (meth)acrylate,
2-hydroxyethyl (meth)acrylate, 2,2-dimethylbutyl acrylate,
2-hydroxybutyl (meth)acrylate, n-propyl (meth)acrylate,
n-butyl (meth)acrylate, i-butyl (meth)acrylate,
t-butyl (meth)acrylate, n-hexyl (meth)acrylate,
n-pentyl (meth)acrylate, n-octyl (meth)acrylate,
2-methoxyethyl (meth)acrylate, 2-methoxymethoxyethyl acrylate,
3-pentyl (meth)acrylate,
3-metrhyl-2-norbornylmethyl methacrylate,
3-methoxbutyl (meth)acrylate, 4-hydroxybutyl (meth)acrylate,
4-methyl-2-propylpentyl acrylate,
5-norbornen-2-ylmethyl methacrylate, i-propyl (meth)acrylate,
n-octadecyl (meth)acrylate, n-nonyl (meth)acrylate,
sec-butyl (meth)acrylate, t-pentyl (meth)acrylate,
ethyl α-hydroxymethylacrylate, butyl α-hydroxymethylacrylate,
methyl α-hydroxymethylacrylate, (meth)acrylic acid,
n-stearyl acrylate, isooctyl acrylate, isononyl acrylate,
isobornyl (meth)acrylate, ethyl (meth)acrylate,
ethylcarbitol acrylate, ethoxyethyl (meth)acrylate,
ethoxyethoxyethyl (meth)acrylate,
ethoxydiethylene glycol acrylate, cyclohexyl (meth)acrylate,
cyclohexylmethyl (meth)acrylate, cyclopentyl acrylate,
dicyclopentenyloxyethyl acrylate, cetyl acrylate,
tetrahydrofurfuryl (meth)acrylate,
phenoxyethyl (meth)acrylate,
(meth)acryloyloxyethyl hydrogen phthalate,
benzyl (meth)acrylate, methyl (meth)acrylate,
methoxyethyl (meth)acrylate,
methoxyethoxyethyl (meth)acrylate,
methoxypolyethylene glycol (meth)acrylate,
lauryl (meth)acrylate, 1,3-butanediol di (meth)acrylate,
1,4-butanediol di (meth)acrylate,
1,6-hexanediol di(meth)acrylate,
1,9-nonanediol di(meth)acrylate,
allylated cyclohexyl di(meth)acrylate,
glycerin di(meth)acrylate, dicyclopentanyl di(meth)acrylate,
tricyclodecane dimethanol di(meth)acrylate,
trimethylolpropane di(meth)acrylate,
neopentylglycol adipate di(meth)acrylate,
neopentylglycol di(meth)acrylate,
neopentylglycol hydroxypivalate diacrylate,
ethoxylated trimethylolpropane tri(meth)acrylate,
glycerinpropoxy tri(meth)acrylate,
trimethylopropane polyethoxy tri(meth)acrylate,
propionic acid-modified dipentaerythritol tri(meth)acrylate,
ditrimethylolpropane tetra(meth)acrylate,
propionic acid-modified dipentaerythritol tetra(meth)acrylate,
propoxylated pentaerythritol tetra(meth)acrylate,
propionic acid-modified dipentaerythritol penta(meth)acrylate,
glycidyl methacrylate, N,N-dimethylacrylamide,
N,N-diethylacrylamide, vinylbenzene, divinylbenzene,
vinyltoluene, styrene, α-methylstyrene, and p-methylstyrene.
Incidentally, the term "(meth)acrylate" in the foregoing denotes acrylate as well as methacrylate.

The polymerizable compound having ethylenic unsaturated bonds additionally includes urethane compounds (which are obtained by reaction between a polyisocyanate compound and a hydroxyalkyl unsaturated carboxylic ester compound), those compounds (which are obtained by reaction between a polyepoxy compound and a hydroxyalkyl unsaturated carboxylic ester), diallyl esters (such as diallyl phthalate), and divinyl compounds (such as divinyl phthalate).

The polymerizable compounds having epoxy rings are not specifically restricted. They include those which have 1 to 6 epoxy rings.
These epoxy compounds having epoxy rings are produced from a compound having 2 or more hydroxyl groups or carboxyl groups (such as diol, triol, dicarboxylic acid, and tricarboxylic acid) and a glycidyl compound (such as epichlorohydrin). They have 2 or more glycidyl ether structures or glycidyl ester structures.

The polymerizable compounds having epoxy rings are listed below, for example.
1,4-butanediol diglycidyl ether,
1,2-epoxy-4-(epoxyethyl)cyclohexane,
glycerol triglycidyl ether,
diethylene glycol diglycidyl ether,
2,6-diglycidylphenyl glycidyl ether,
1,1,3-tris[p-(2,3-epoxypropoxy)phenyl]propane,
diglycidyl ester of 1,2-cycohexanedicarboxylic acid,
4,4'-methylenebis(N,N-diglycidylaniline),
3,4-epoxycyclohexylmethyl-3,4-epoxycyclohexanecarboxylate,
trimethylolethanetriglycidyl ether, triglycidyl-p-aminophenol,
tetraglycidylmetaxylenediamine,
tetraglycidyldiaminodiphenylmethane,
tetraglycidyl-1,3-bisaminomethylcyclohexane,
bisphenol-A-diglycidyl ether, bisphenol-S-diglycidyl ether,
pentaerythritol tetraglycidyl ether resorcinol diglycidyl ether,
diglycidyl ester of phthalic acid,
neopentyl glycol diglycidyl ether,
polypropylene glycol diglycidyl ether,
tetrabromobisphenol-A-diglycidyl ether,
bisphenolhexafluoroacetone diglycidyl ether,
pentaerythritol diglycidyl ether,
hydrogenated bisphenol-A-diglycidyl ether,
tris-(2,3-epoxypropyl)isocyanurate,
1-{2,3-di(propionyloxy)}-3,5-bis(2,3-epoxypropyl)-1,3,5-triazine-2,4,6-(1H, 3H, 5H)-trione,
1,3-bis{2,3-di(propionyloxy)}-5-(2,3-epoxypropyl)-1,3,5-triazine-2,4,6-(1H, 3H, 5H)-trione,
monoallyldiglycidyl isocyanurate,
diglycerolpolydiglycidyl ether,
pentaerythritol polyglycidyl ether,
1,4-bis(2,3-epoxypropoxyperfluoroisopropyl)cyclohexane,
sorbitol polyglycidyl ether,
trimethyl-olpropane polyglycidyl ether,
resorcin diglycidyl ether, 1,6-hexanedioldiglycidyl ether,
polyethylene glycol diglycidyl ether, phenylglycidyl ether,
p-tertiarybutylphenyl diglycidyl ether,
adipic acid diglycidyl ether,
o-phthalic acid diglycidyl ether, dibromophenylglycidyl ether,
1,2,7,8-diepoxyoctane,
1,6-dimethylolperfluorohexane diglycidyl ether,
4,4-bis(2,3-epoxypropoxyperfluoroisopropyl)diphenyl ether,
2,2-bis(4-glycidyloxyphenyl)propane,
3,4-epoxycyclohexylmethyl-3',4'-epoxycyclohexane carboxylate,
3,4-epoxycyclohexyloxirane,
2-(3,4-epoxycyclohexyl)-3',4'-epoxy-1,3-dioxane-5-spirocyclohexane,
1,2-ethyleneoxy-bis(3,4-epoxycyclohexymethane),
4',5'-epoxy-2'-methylcyclohexylmethyl-4,5-epoxy-2-methylcyclohexane carboxylate,
ethylene glycol bis(3,4-epoxycyclohexane carboxylate),
bis-(3,4-epoxycyclohexylmethyl) adipate, and
bis(2,3-epoxycyclopentyl)ether.

The polymerizable compound having oxetane rings is not specifically restricted. It includes those which have 1 to 6 oxetane rings.
Their examples are listed below.
3-ethyl-3-hydroxymethyl oxetane,
3-ethyl-3-(phenoxyethyl)oxetane, 3,3-diethyloxetane,
3-ethyl-3-(2-ethylhexyloxymethyl)oxetane,
1,4-bis(((3-ethyl-3-oxetanyl)methoxy)methyl)benzene,
di((3-ethyl-3-oxetanyl)methyl)ether, and
penterythritol tetrakis((3-ethyl-3-oxetanyl)methyl)ether.

The polymerizable compound having the vinyl ether structure is not specifically restricted. It includes those which have 1 to 6 vinyl ether structures.
Their examples are listed below.
Vinyl 2-chloroethyl ether, vinyl n-butyl ether,
1,4-cyclohexanedimethanol divinyl ether, vinyl glycidyl ether,
bis(4-(vinyloxymethyl)cyclohexylmethyl) glutarate,
tri(ethylene glycol) divinyl ether, divinyl adipate,
diethylene glycol divinyl ether,
tris(4-vinyloxy)butyl trimellitate,
bis(4-(vinyloxy)butyl) terephthalate,
bis(4-(vinyloxy)butyl isophthalate,
ethylene glycol divinyl ether, 1,4-butanediol divinyl ether,
tetramethylene glycol divinyl ether,
tetraethylene glycol divinyl ether,
neopentyl glycol divinyl ether,
trimethylopropane trivinyl ether,
trimethylolethane trivinyl ether, hexanediol divinyl ether,
1,4-cyclohexanediol divinyl ether,
tetraethylene glycol divinyl ether,
pentaerythritol divinyl ether, pentaerythritol trivinyl ether,
and cyclohexanedimethanol divinyl ether.

The coating composition according to the present invention may be incorporated with the above-mentioned binder alone (which is silica dispersed in a polymerizable monomer). The binder may also be used in combination with another one so that the resulting thin film has desirable hardness.
Examples of the additional binder include acrylic resin, polyester resin, urethane resin, epoxy resin, polyvinyl alcohol resin, melamine resin, gelatin and derivatives thereof, cellulose and derivatives thereof, polyimide resin, phenolic resin, organosilicon compounds, urea resin, diallyl phthalate resin, and butyral resin. They may be used alone or in combination with one another.

The acrylic resin denotes any one which is obtained by radical polymerization in any known way from one or more species of (meth)acryl monomer listed below. The monomer may be previously incorporated into the composition and polymerized when the coating film is formed.
Examples of the (meth)acryl monomer are listed below.
Trifluoroethyl acrylate, trifluoromethyl acrylate,
phenylglycidyl acrylate, hydroxyethyl (meth)acrylate,
tetrahydrofurfuryl acrylate, acryloylmorpholine,
N-vinylpyrrolidone, N-vinyl-ε-caprolactam,
neopentyl glycol (meth)acrylate,
1,6-hexanediol di(meth)acrylate,
trimethylolpropane (meth)acrylate,
ditrimethylolpropane (meth)acrylate,
pentaerythritol tetra(meth)acrylate,
pentaerythritol tri(meth)acrylate,
pentaerythritol (meth)acrylate,
ethylene glycol di(meth)acrylate,
diethylene glycol di(meth)acrylate,
triethylene glycol di(meth)acrylate,
tetraethylene glycol di(meth)acrylate,
nonaethylene glycol di(meth)acrylate,
polyethylene glycol di(meth)acrylate,
tripropylene glycol di(meth)acrylate,
tetrapropylene glycol di(meth)acrylate,
nonapropylene glycol di(meth)acrylate,
polypropylene glycol di(meth)acrylate,
neopentyl glycol hydroxypivalate di(meth)acrylate,
bisphenol-A-di(meth)acrylate,
2-ethyl-2-butyl-propanediol di(meth)acrylate,
1,9-nonanediol di(meth)acrylate,
hexyl-2,2-bis[4-(acryloxydiethoxy)phenyl]propane,
2,2-bis[4-(methacryloxydiethoxy)phenyl]propane,
3-phenoxy-2-propanoyl acrylate,
1,6-bis(3-acryloxy-2-hydroxpropyl)-hexyl ether,
trimethylolpropane tri(meth)acrylate,
glycerin tri(meth)acrylate,
tris-(2-hydroxyethyl)-isocyanurate (meth)acrylate,
pentaerythritol penta(meth)acrylate,
dipentaerythritol hexa(meth)acrylate,
2-hydroxypropyl (meth)acrylate, isobutyl (meth)acrylate,
t-butyl (meth)acrylate, 2-ethylhexyl (meth)acrylate,
stearyl acrylate, 2-ethylhexylcarbitol acrylate,
ω-carboxypolycaprolactone monoacrylate, acryloyloxyethyl acid,
acrylic acid dimer, lauryl (meth)acrylate,
2-methoxyethyl acrylate, butoxy ethyl acrylate,
ethoxyethoxyethyl acrylate,
methoxytriethylene glycol acrylate,
methoxypolyethylene glycol acrylate, stearyl (meth)acrylate,
cyclohexyl (meth)acrylate, tetrahydrofurfuryl (meth)acrylate,
N-vinyl-2-pyrrolidone, isobornyl (meth)acrylate,
dicyclopentenyl acrylate, benzylacrylate,
phenylglycidyl ether epoxy acrylate,
phenoxyethyl (meth)acrylate,
phenoxy(poly)ethylene glycol acrylate,
nonylphenol ethoxylated acrylate,
acryloyloxyethylphthalic acid, tribromophenyl acrylate,
tribromophenolethoxylated (meth)acrylate,
methyl (meth)acrylate, tribromophenyl methacrylate,
methacryloyloxyethyl acid, methacryloyloxyethylmaleic acid,
methacryloyoxyethylhexahydrophthalic acid,
methacryloyloxyethylphthalic acid,
polyethylene glycol (meth)acrylate,
polypropylene glycol (meth)acrylate, β-carboxyethyl acrylate,
N-methylolacrylamide, N-methoxymethylacrylamide,
N-ethoxymethylacrylamide, N-n-butoxymethylacrylamide,
t-butylacrylamidesulfonic acid, vinyl stearate,
N-methylacrylamide, N-dimethylacrylamide,
N-dimethylaminoethyl (meth)acrylate, N-dimethylacrylamide,
N-dimethylaminoethyl (meth)acrylate,
N-dimethylaminopropylacrylamide, glycidyl methacrylate,
n-butyl methacrylate, ethyl methacrylate, allyl methacrylate,
cetyl methacrylate, pentadecyl methacrylate,
methoxypolyethylene glycol (meth)acrylate,
diethylaminoethyl (meth)acrylate,
methacryloyloxyethyl succinic acid, hexanediol diacrylate,
neopentylglycol diacrylate, triethylene glycol diacrylate,
polyethylene glycol diacrylate,
polypropylene glycol diacrylate,
hydroxypivalate eater neopentyl,
pentaerythritol diacrylate monostearate, glycol diacrylate,
2-hydroxyethylmethacryloyl phosphate, glycol diacrylate,
2-hydroxyethylmethacryloyl phosphate,
bisphenol-A-ethylene glycol-added acrylate,
bisphenol-F-ethylene glycol-added acrylate,
tricyclodecanemethanol diacrylate,
trishydroxyethyl isocyanurate diacrylate,
2-hydroxy-1-acryloxy-3-methacryloxypropane,
trimethylolpropane triacrylate,
trimethylolpropane ethylene glycol-added triacrylate,
trimethylolpropane propylene glycol-added triacrylate,
pentaerythritol triacrylate, trisacryloyloxyethyl phosphate,
trishydroxyethyl isocyanurate triacrylate,
modified ε-caprolactone triacrylate,
trimethylolpropaneethoxy triacrylate,
glycerinpropylene glycol-added triacrylate,
pentaerythritol tetraacrylate,
pentaerythritol ethylene glycol-added tetraacrylate,
ditrimethylolpropane tetraacrylate,
dipentaerythritol (penta)acrylate,
dipentaerythritol monohydroxy pentaacrylate, and
epoxyacrylate.

The polyester resin includes linear polyesters which are composed of dicarboxylic acid component and glycol component.
Examples of the dicarboxylic acid include
terephthalic acid, isophthalic acid, phthalic acid,
2,6-naphthalenedicarboxylic acid,
4,4-diphenyldicarboxylic acid,
1,4-cyclohexanedicarboxylic acid, adipic acid, sebacic acid, phenylindane dicarboxylic acid, and dimer acid. They may be used alone or in combination with one another.
Examples of the glycol include ethylene glycol,
1,4-butanediol, neopentyl glycol, diethylene glycol,
dipropylene glycol, 1,6-hexanediol, 1,4-cyclohexanedimethanol,
xylylene glycol, dimethylolpropionic acid, glycerin,
trimethylolpropane, poly(ethyleneoxy)glycol,
poly(tetramethyleneoxy)glycol,
alkyleneoxide adduct of bisphenol-A, and
alkyleneoxide adduct of hydrogenated bisphenol-A. They may be used alone or in combination with one another.

The urethane resin includes those which are obtained by polyaddition reaction from polyisocyanate and an active hydrogen-containing compound.
Examples of the polyisocyanate include
ethylene diisocyanate, tetramethylene diisocyanate,
hexamethylene diisocyanate (HDI),
dodecamethylene diisocyanate, 1,6,11-undecane triisocyanate,
2,2,4-trimethylhexamethylene diisocyanate,
lysine diisocyanate (2,6-diisocyanatomethylcaproate),
bis(2-isocyanateethyl)maleate,
bis(2-isocyanatoethyl)carbonate,
2-isocyanatoethyl-2,6-diisocyanatohexanoate,
isophorone diisocyanate (IPDI),
dicyclohexylmethane-4,4'-diisocyanate (hydrogenated MDI),
cyclohexylene diisocyanate, methylcyclohexylene isocyanate,
bis(2-isocyanatoethyl)-4-cyclochexene-1,2-dicarboxylate,
2,5- or 2,6-norbornane diisocyanate,
m- or p-xylylene diisocyanate, and
α,α,α',α'-tetramethylxylylene diisocyanate.
The polyisocyanate mentioned above may also include modified ones, such as modified MDI (e.g., urethane-modified MDI, carbodiimided modified MDI, and trihydrocarbyl phosphate-modified MDI), urethane-modified TDI, biuret-modified HDI, isocyanurate-modified HDI, and isocyanurate-modified IPDI.
The above-mentioned polyisocyanates and modified products thereof may be used alone or in combination with one another.

Examples of the active hydrogen-containing compounds include dihydric alcohols (such as ethylene glycol, diethylene glycol, 1,3-propanediol, 1,4-butanediol, 1,5-pentanediol, and 1,6-hexanediol); diols having branched chains (such as propylene glycol, neopentyl glycol, 3-methyl-1,5-pentanediol, 2,2-diethyl-1,3-propanediol, and 1,2-, 1,3-, or 2,3-butanediol); diols having cyclic groups (such as 1,4-bis(hydroxymethyl)cyclohexane, and m- or p-xylene glycol); dihydric phenols (such as bisphenol-A); polyhydric alcohols (such as glycerin, trimethylolpropane, pentaerythritol, and sorbitol), saccharides and derivatives thereof (such as sucrose and methylglucoside); aliphatic diamines (such as ethylenediamine and hexamethylenediamine), aliphatic diamines (such as 4,4'-diamino-3,3'-dimethyldicyclohexylmethane, 4,4'-diamino-3,3'-dimethyldicyclohexyl, diaminocyclohexane, and isophoronediamine); aromatic aliphatic diamines (such as diethyltoluenediamine); aromatic alicyclic diamines (such as xylylenediamine and α,α,α',α'-tetramethylxylylenediamine); heterocyclic diamine (such as piperidine); polyfunctional amines (such as diethylene triamine and triethylenetetramine), polymeric polyols (such as polyester polyol and polyether polyol); aliphatic polycarboxylic acid (such as succinic acid, glutaric acid, maleic acid, fumaric acid, adipic acid, azelaic acid, sebacic acid, and hexahydrophthalic acid); aromatic polycarboxylic acids (such as phthalic acid, isophthalic acid, terephthalic acid, tetrabromophthalic acid, tetrachlorophthalic acid, trimellitic acid, and pyromellitic acid); polycarboxylic anhydrides (such as maleic anhydride and phthalic anhydride); dimethyl terephthalate; lactone monomers (such as γ-butyrolactone, ε-caprolactone, and γ-valerolactone); and those compounds having more than 2 active hydrogen atoms which have alkylene oxide added thereto. They may be used alone or in combination with one another.

The epoxy resin mentioned above includes, for example, liquid epoxy resins and derivatives thereof (in the form of bisphenol-A, bisphenol-F, hydrogenated bisphenol-A, bisphenol-AF, or phenol novolak), liquid epoxy resins and derivatives thereof (derived from polyhydric alcohol and epichlorohydrin), and liquid epoxy resins of glycidyl type and derivatives thereof (those of glycidyl amine type, hydantoin type, aminophenol type, aniline type, and toluidine type). They may be used alone or in combination with one another.

The polyvinyl alcohol resin mentioned above includes those which are obtained by saponification from polyvinyl ester which is a radical polymerization product of vinyl ester monomer such as vinyl acetate.
Its examples include polymers obtained from vinyl esters such as vinyl formate, vinyl acetate, vinyl propionate, vinyl valerate, vinyl laurate, vinyl stearate, vinyl benzoate, vinyl pivalate, and vinyl versatate. They may be used alone or in combination with one another.
The polyvinyl ester may also be a copolymer obtained by copolymerization of the above-mentioned vinyl ester monomer with a copolymerizable comonomer.
Examples of the comonomer include olefins (such as ethylene, propylene, 1-butene, and isobutene); (meth)acrylic acid and salts thereof; (meth)acrylic esters (such as methyl (met)acrylate, ethyl (met)acrylate, n-propyl (met)acrylate, i-propyl (met)acrylate, n-butyl (meth)acrylate, i-butyl (met)acrylate, t-butyl (met)acrylate, 2-ethylhexyl (met)acrylate, dodecyl (met)acrylate, and octadecyl (met)acrylate); acrylamide and derivatives thereof (such as hydroxyalkyl, N-methylacrylamide, N-ethylacrylamide N,N-dimethylacrylamide, diacetoneacrylamide, acrylamidepropanesulfonic acid and salt thereof, acrylamidepropyldimethylamine and salt or quaternary salt thereof, and N-methylolacrylamide and derivatives thereof); methacrylamide and derivatives thereof (such as N-methyl methacrylamide, N-ethyl methacrylamide, methacrylamidepropanesulfonic acid and salt thereof, methacrylamidepropyldimethylamine and salt or quaternary salt thereof, and N-methylolmethacrylamide and derivatives thereof); vinyl ethers (such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether); nitriles (such as (meth)acrylonitrile), vinyl halide (such as vinyl chloride, vinylidene chloride, vinyl fluoride, and vinylidene fluoride); allyl compounds (such as allyl acetate and allyl chloride); maleic acid and salt or ester thereof; vinyl silyl compounds (such as vinyltrimethoxysilane); and isopropenyl acetate.

The melamine resin mentioned above includes methylated melamine resin, butylated melamine resin, and melamine resin of methyl-butyl mixed type. They may be used alone or in combination with one another.
The gelatin and derivatives thereof mentioned above include phthalated gelatin, succinated gelatin, trimellit gelatin, pyromellitic gelatin, esterized gelatin, amidized gelatin, and formylated gelatin. They may be used alone or in combination with one another.
The cellulose and derivatives thereof mentioned above include acetyl cellulose, diacetyl cellulose, triacetyl cellulose, hydroxypropyl cellulose, cellulose acetate propionate, cellulose acetate butyrate, cellulose acetate phthalate, cellulose acetate trimellitate, and cellulose nitrate. They may be used alone or in combination with one another.

The organosilicon compound mentioned above includes those compounds represented by the formula (I) or (II) given below or their hydrolyzates, and silicone varnish and modified silicone varnish (such as silicone alkyd varnish, silicone epoxy varnish, silicone acryl varnish, and silicone polyester varnish).

(R¹)ₐ(R³)_{b}Si(OR²)_{4-(a+b)} (I)

(where, R¹ and R³ independently denote alkyl group, alkenyl group, aryl group, acyl group, halogen group, glycidoxy group, epoxy group, amino group, phenyl group, mercapto group, methacryloxy group, or cyano group; R² denotes C₁₋₈ alkyl group, alkoxyl group, acyl group, or phenyl group; and a and b denote 0 or 1.)

{(OX)₃₋ₐSi(R⁴)}₂Y (II)

(where, R⁴ denotes a C₁₋₅ organic group, X denotes a C₁₋₄ alkyl group or acyl group, Y denotes a C₂₋₂₀ organic group, and a is 0 or 1.)

Examples of the organosilicon compounds represented by the formula (I) are listed below.
Methyl silicate, ethyl silicate, n-propyl silicate,
iso-propyl silicate, n-butyl silicate, tetraacetoxysilane,
methyltrimethoxysilane, methyltripropoxysilane,
methyltriacetoxysilane, methyltributoxysilane,
methyltripropoxysilane, methyltriamiloxysilane,
methyltriphenoxysilane, methyltribenzyloxysilane,
methyltriphenetyloxysilane, glycidoxymethyltrimethoxysilane,
glycidoxymethyltriethoxysilane,
α-glycidoxyethyltrimethoxysilane,
α-glycidoxyethyltriethoxysilane,
β-glycidoxyethyltrimethoxysilane,
β-glycidoxyethyltriethoxysilane,
α-glycidoxypropylmethoxysilane,
α-glycidoxypropylethoxysilane,
β-glycidoxypropyltrimethoxysilane,
β-glycidoxypropyltriethoxysilane,
γ-glycidoxypropyltrimethoxysilane,
γ-glycidoxypropyltriethoxysilane,
γ-glycidoxypropyltripropoxysilane,
γ-glycidoxypropyltributoxysilane,
γ-glycidoxypropyltriphenoxysilane,
α-glycidoxybutyltrimethoxysilane,
α-glycidoxybutyltriethoxysilane,
β-glycidoxybutyltrimethoxysilane,
β-glycidoxybutyltriethoxysilane,
γ-glycidoxybutyltrimethoxysilane,
γ-glycidoxybutyltriethoxysilane,
δ-glycidoxybutyltrimethoxysilane,
δ-glycidoxybutyltriethoxysilane,
(3,4-epoxycyclohexyl)methyltrimethoxysilane,
(3,4-epoxycyclohexyl)methyltriethoxysilane,
β-(3,4-epoxycyclohexyl)ethyltrimethoxysilane,
β-(3,4-epoxycyclohexyl)ethyltriethoxysilane,
β-(3,4-epoxycyclohexyl)ethyltripropoxysilane,
β-(3,4-epoxycyclohexyl)ethyltributoxysilane,
β-(3,4-epoxycyclohexyl)ethyltriphenoxysilane,
γ-(3,4-epoxycyclohexyl)propyltrimethoxysilane,
γ-(3,4-epoxycyclohexyl)propyltriethoxysilane,
δ-(3,4-epoxycyclohexyl)butyltrimethoxysilane,
δ-(3,4-epoxycyclohexyl)butyltriethoxysilane,
glycidoxymethylmethyldimethoxysilane,
glycidoxymethylmethyldiethoxysilane,
α-glycidoxyethylmethyldimethoxysilane,
α-glycidoxyethylmethyldiethoxysilane,
β-glycidoxyethylmethyldimethoxysilane,
β-glycidoxyethylethyldimethoxysilane,
α-glycidoxypropylmethyldimethoxysilane,
α-glycidoxypropylmethyldiethoxysilane,
β-glycidoxypropylmethyldimethoxysilane,
β-glycidoxypropylethyldimethoxysilane,
γ-glycidoxypropyldimethoxysilane,
γ-glycidoxypropylmethyldiethoxysilane,
γ-glycidoxypropylethyldibutoxysilane,
γ-glycidoxypropylmethyldibutoxysilane,
γ-glycidoxypropylmethyldiphenoxysilane,
γ-glycidoxypropylethyldimethoxysilane,
γ-glycidoxypropylethyldiethoxysilane,
γ-glycidoxypropylvinylmethoxysilane,
γ-glycidoxypropylvinylethoxysilane,
γ-glycidoxypropylvinylphenylmethoxysilane,
γ-glycidoxypropylvinylphenylethoxysilane,
ethyltrimethoxysilane, ethyltriethoxysilane,
vinyltrimethoxysilane, vinyltriacetoxysilane,
vinyltriethoxysilane phenyltrimethoxysilane,
phenyltriethoxysilane, phenyltriacetoxysilane,
γ-chloropropyltrimethoxysilane, γ-chloropropyltriethoxysilane,
γ-chloropropyltriacetoxysilane,
3,3,3-trifluoropropyltrimethoxysilane,
γ-methacryloxypropyltrimethoxysilane,
γ-mercaptopropyltrimethoxysilane,
γ-mercaptopropyltriethoxysilane, β-cyanoethyltriethoxysilane,
chloromethyltrimethoxysilane, chloromethyltriethoxysilane,
N-(β-aminoethyl)-γ-aminopropyltrimethoxysilane,
N-(β-aminoethyl)-γ-aminopropylmethyldimethoxysilane,
γ-amionopropylmethyltrimethoxysilane,
N-(β-aminoethyl)-γ-aminopropyltriethoxysilane,
N-(β-aminoethyl)-γ-aminopropylmethyldiethoxysilane,
dimethyldimethoxysilane, phenylmethyldimethoxysilane,
dimethyldiethoxylsilane, phenylmethyldiethoxysilane,
γ-chloropropylmethyldimethoxysilane,
γ-chloropropylmethyldiethoxysilane, dimethyldiacetoxysilane,
γ-methacryloxypropylmethyldimethoxysilane,
γ-methacryloxypropylmethyldiethoxysilane,
γ-mercaptopropylmethyldimethoxysilane,
γ-mercaptomethyldiethoxysilane, methylvinyldimethoxysilane,
and methylvinyldiethoxysilan.
Examples of the organosilicon compounds represented by the formula (II) are listed below.
Methylenebismethyldimethoxysilane,
ethylenebisethyldimethoxysilane,
proylenebisethyldiethoxysilane, and
butylenebismethyldiethoxysilane.

The organosilicon compounds represented by the formulas (I) and (II) above and the hydrolyzates thereof may be used alone or in combination with one another. In either case, more than two compounds of each of the formulas (I) and (II) may be used alone or in combination with one another.
The organosilicon compounds represented by the formulas (I) and (II) may be hydrolyzed by mixing them with an acidic aqueous solution of hydrochloric acid, sulfuric acid, acetic acid, or the like.

The diallyl phthalate resin mentioned above includes diallyl phthalate, diallylisophthalate, and diallyl terephthalate.
The butyral resin mentioned above includes polyvinyl butyral.

The conductive coating composition according to the present invention is not specifically restricted in the mixing ratio of the colloid particles (as the intrinsically conductive polymer contained in the dispersion of intrinsically conductive polymer in an organic solvent) and the solid component of the binder. It should preferably be in the range of from 99.9:0.1 to 0.1:99.9, more preferably from 99:1 to 1:99 (by weight).
In the case where the binder is composed of colloidal silica and an additional binder, their mixing ratio is not specifically restricted. A preferable mixing ratio (for silica to additional binder) ranges from 1:99 to 99:1, more preferably from 5:90 to 50:50.
The conductive coating composition may be prepared by any method without specific restrictions. It is only necessary to mix the dispersion of the intrinsically conductive polymer in an organic solvent with the binder in the usual way.

The conductive coating composition according to the present invention may contain, for its good dispersibility and storage stability, such additives as surfactant, acid, and base in an amount of 0.1 to 10 wt% for the composition.
The surfactant is not specifically restricted. It may be selected from any known anionic, cationic, and nonionic ones.
The acid includes, for example, inorganic acids (such as hydrochloric acid, nitric acid, and orthophosphoric acid), aliphatic oxy acids (such as oxalic acid, lactic acid, tartaric acid, malic acid, citric acid, glycolic acid, hydroacrylic acid, α-oxybutyric acid, glycerinic acid, and tartronic acid), and phosphonic acids (such as phenylphosphonic acid and 1-hydroxyethylidene-1,1-diphosphonic acid).

The base includes, for example, ammonia, alkali metal hydroxides, alkyl or aralkylamines (such as ethylamine, diethylamine, n-propylamine, isopropylamine, diisopropylamine, dipropylamine, n-dibutylamine, isobutylamine, diisobutylamine, triethylamine, benzylamine, octylamine, and dodecylamine, stearylamine), alkanolamines (such as monoethanolamine and triethanolamine), quaternary ammonium hydroxides (such as guanidine hydroxide, tetramethylammonium hydroxide, and tetraethylammonium hydroxide), and organic bases (such as ammonium carbonate and guanidine carbonate).

The conductive coating composition according to the present invention may be applied to a substrate and then made into a thin film by hardening treatment.
The substrate for coating includes various materials such as plastics, rubber, glass, metal, ceramics, and paper.
The coating composition may be applied to the substrate by any known method selected from bar coating, reverse coating, gravure printing, microgravure printing, dipping, spin coating, and spraying.
Hardening may be accomplished by hot air drying or irradiation with active energy rays.
Hot air drying should be carried out at 70 to 200°C, preferably 90 to 150°C.
The active energy rays may be any of ultraviolet rays, infrared rays, far-infrared rays, and electron rays.

The coating composition according to the present invention will give a coating film which varies in thickness from 0.05 to 10 µm, preferably from 0.1 to 5 µm, depending on application.
The coating film mentioned above exhibits good conductivity, with its surface resistance ranging from 10° to 10¹⁴ Ω/□. Incidentally, the surface resistance may be measured with "High rester UP" or "Low rester IP," a product from Mitsubishi Chemical Inc.

The conductive coating film according to the present invention may be given an antireflection function by lamination thereon with an antireflection film.
The antireflection film should preferably have a lower refractive index than the conductive coating film, with the difference between them being larger than 0.05, preferably 0.1 to 0.5, and most desirably 0.15 to 0.5. If the difference in refractive index is smaller than 0.05, the antireflecting film does not enhance its effect but even reduce its effect.

The antireflecting film is not specifically restricted in thickness; however, it should preferably have a thickness of 50 to 300 nm. With a thickness under 50 nm, the antireflecting film will be poor in adhesion to the underlying conductive coating film. On the other hand, with a thickness over 300 nm, the antireflecting film causes optical interference, thereby aggravating the antireflecting effect. In the case where two or more antireflecting films are formed for better antireflecting effect, their total thickness should be 50 to 300 nm.

The antireflecting film may be formed from any material (listed below) without specific restrictions. Organosilicon compounds represented by the formula (I) or (II) above or hydrolyzates thereof; fluoroplastic resin such as fluoroolefin polymer and fluorine-containing acrylic polymer; and low-refracting coating composition composed of fine particles having a low refractive index (such as magnesium fluoride, lithium fluoride, and sodium fluoride) or porous fine particles and an organic or inorganic binder.
The antireflecting film may also be formed from an inorganic compound (such as magnesium fluoride and silica) by vacuum deposition or sputtering.

Moreover, the conductive coating film according to the present invention may be covered with a multilayered antireflecting film which is composed of high-refracting layers and low-refracting layers laminated alternately so as to have antireflection property.
In this case, the high-refracting layer may be formed from an oxide of at least one species selected from the group consisting of titanium, tantalum, zirconium, niobium, and yttrium. The low-refracting layer may be formed from at least one species selected from the group consisting of silica, alumina, magnesium fluoride, lithium fluoride, and sodium fluoride.
The high-refracting layer and low-refracting layer may be formed by vacuum deposition, sputtering, or ion plating (dry plating).

### EXAMPLES

The present invention will be described below in more detail with reference to Examples and Comparative Examples, which are not intended to restrict the scope thereof. Incidentally, the conductive coating film in each Example was examined for physical properties according to the test methods and test conditions specified below.

### [1] Tt value

Measured with TC-H3DPK-MKII (spectral haze meter) from Tokyo Denshoku Co., Ltd.

### [2] Haze value

Measured with TC-H3DPK-MKII (spectral haze meter) from Tokyo Denshoku Co., Ltd.

### [3] Surface resistance value

Measured with Loresta IP TCP-T250, from Mitsubishi Chemical Inc.

### [4] Pencil hardness

Measured according to JIS-K5600-5-4 with "No. 553-M Film Hardness Tester By Means of Pencils" made by Yasuda Seiki Seisakusho Co., Ltd.

### [5] Cross cut test

Accomplished according to JIS-K5600 with the cross cut guide (CCI-1) made by Cotec Co., Ltd. Rated in terms of the number of remaining cut pieces.

### Examples 1 and 2

First, a UV light-curable binder composition was prepared by mixing from the components listed below.
NW-D102MT, which is a dispersion in methanol of an intrinsically conductive polymer containing doped polyaniline, with a solid content of 0.9 wt%. Produced by Nissan Chemical Industries Ltd.
ACR-ST-2101 (9.5 g), which is colloidal silica dispersed in tetrahydrofurfuryl acrylate, with a silica content of 30 wt%. (The same is applied hereinafter.) Produced by Nissan Chemical Industries Ltd.
KAYARAD PET30 (9.5 g), which is pentaerythritol triacrylate. Produced by Nippon Kayaku Co., Ltd.
IRGACURE 184 (1 g), which is a photoinitiator, produced by Ciba-Geigy Corporation.
Methanol (30 g)
Second, the resulting binder was mixed for concentration adjustment with methanol in a mixing ratio shown in Table 1.
Thus there was obtained the coating composition, which was found good in dispersion state.
The thus obtained coating composition was applied to PET film (HK-31WF, from Higashiyama Film Co., Ltd.) by means of a wire bar coater (#12), such that the wet film had a thickness of 27.4 µm. After drying at 50°C for 10 minutes, the film was irradiated with ultraviolet rays by means of a UV irradiating machine. Thus there was obtained the conductive coating film as desired. The conductive coating film was examined for Tt value, haze value, surface resistance, pencil hardness, and cross cut. The results are shown in Table 1.

**Table 1**

| | NW-D102MT (g) | Binder composition (g) | Methanol (g) | Tt (%) | Haze (%) | Surface resistance (Ω/□) | Pencil hardness | Cross cut |
|---|---|---|---|---|---|---|---|---|
| Example 1 | 1.67 | 0.09 | 3.25 | 99.3 | 1.1 | 1.5×10⁵ | 2H | 100 |
| Example 2 | 2.78 | 0.06 | 2.16 | 97.4 | 0.2 | 2.3×10⁴ | H | 100 |

### Examples 3 and 4

First, a UV light-curable binder composition was prepared by mixing from the components listed below.
NW-F102ET, which is a dispersion in methanol-denatured alcohol of an intrinsically conductive polymer containing doped polyaniline, with a solid content of 0.9 wt%. Produced by Nissan Chemical Industries Ltd.
ACR-ST-2101 (9.5 g), which is colloidal silica dispersed in tetrahydrofurfuryl acrylate. Produced by Nissan Chemical Industries Ltd.
KAYARAD PET30 (9.5 g), which is pentaerythritol triacrylate. Produced by Nippon Kayaku Co., Ltd.
IRGACURE 184 (1 g), which is a photoinitiator, produced by Ciba-Geigy Corporation.
Methanol-denatured alcohol (30 g)
Second, the resulting binder was mixed for concentration adjustment with methanol-denatured alcohol in a mixing ratio shown in Table 2.
Thus there was obtained the coating composition, which was found good in dispersion state.
The thus obtained coating composition was made into a conductive coating film in the same way as in Example 1. The conductive coating film was examined for Tt value, haze value, surface resistance, pencil hardness, and cross cut. The results are shown in Table 2.

**Table 2**

| | NW-F102ET (g) | Binder composition (g) | Denatured alcohol (g) | Tt (%) | Haze (%) | Surface resistance (Ω/□) | Pencil hardness | Cross cut |
|---|---|---|---|---|---|---|---|---|
| Example 3 | 1.67 | 0.09 | 3.25 | 97.4 | 1.3 | 1.5×10⁴ | 2H | 100 |
| Example 4 | 2.78 | 0.06 | 2.16 | 94.5 | 0.4 | 3.9×10³ | H | 100 |

### Example 5

First, a UV light-curable binder composition was prepared by mixing from the components listed below.
NW-F101MEK, which is a dispersion in 2-butanone of an intrinsically conductive polymer containing doped polyaniline, with a solid content of 0.9 wt%. Produced by Nissan Chemical Industries Ltd.
ACR-ST-2101 (9.5 g), which is colloidal silica dispersed in tetrahydrofurfuryl acrylate. Produced by Nissan Chemical Industries Ltd.
KAYARAD PET30 (9.5 g), which is pentaerythritol triacrylate. Produced by Nippon Kayaku Co., Ltd.
IRGACURE 184 (1 g), which is a photoinitiator, produced by Ciba-Geigy Corporation.
2-butanone (30 g)
Second, the resulting binder was mixed for concentration adjustment with 2-butanone in a mixing ratio shown in Table 3.
Thus there was obtained the coating composition, which was found good in dispersion state.
The thus obtained coating composition was made into a conductive coating film in the same way as in Example 1. The conductive coating film was examined for Tt value, haze value, surface resistance, pencil hardness, and cross cut. The results are shown in Table 3.

**Table 3**

| | NW-F101MEK (g) | Binder composition (g) | 2-butanone (g) | Tt (%) | Haze (%) | Surface resistance (Ω/□) | Pencil hardness | Cross cut |
|---|---|---|---|---|---|---|---|---|
| Example 5 | 1.67 | 0.09 | 3.25 | 100 | 2.5 | 2.6×10⁷ | H | 100 |

### Examples 6 to 8

First, a UV light-curable binder composition was prepared by mixing from the components listed below.
NW-D102MT, which is a dispersion in methanol of an intrinsically conductive polymer containing doped polyaniline, with a solid content of 0.9 wt%. Produced by Nissan Chemical Industries Ltd.
ACR-ST-2101 (13.3 g), which is colloidal silica dispersed in tetrahydrofurfuryl acrylate. Produced by Nissan Chemical Industries Ltd.
KAYARAD PET30 (5.7 g), which is pentaerythritol triacrylate. Produced by Nippon Kayaku Co., Ltd.
IRGACURE 184 (1 g), which is a photoinitiator, produced by Ciba-Geigy Corporation.
Methanol (30 g)
Second, the resulting binder was mixed for concentration adjustment with methanol in a mixing ratio shown in Table 4.
Thus there was obtained the coating composition, which was found good in dispersion state.
The thus obtained coating composition was made into a conductive coating film in the same way as in Example 1. The conductive coating film was examined for Tt value, haze value, surface resistance, pencil hardness, and cross cut. The results are shown in Table 4.

**Table 4**

| | NW-D102MT (g) | Binder composition (g) | Methanol (g) | Tt (%) | Haze (%) | Surface resistance (Ω/□) | Pencil hardness | Cross cut |
|---|---|---|---|---|---|---|---|---|
| Example 6 | 1.67 | 0.09 | 3.25 | 98.9 | 0.4 | 1.3×10⁵ | 2H | 100 |
| Example 7 | 2.78 | 0.06 | 2.16 | 97.6 | 0.1 | 2.4×10⁴ | H | 100 |
| Example 8 | 3.89 | 0.04 | 1.07 | 96.5 | 0.0 | 1.0×10⁴ | H | 100 |

### Examples 9 to 11

First, a UV light-curable binder composition was prepared by mixing from the components listed below.
NW-F102ET, which is a dispersion in methanol-denatured alcohol of an intrinsically conductive polymer containing doped polyaniline, with a solid content of 0.9 wt%. Produced by Nissan Chemical Industries Ltd.
ACR-ST-2101 (13.3 g), which is colloidal silica dispersed in tetrahydrofurfuryl acrylate. Produced by Nissan Chemical Industries Ltd.
KAYARAD PET30 (5.7 g), which is pentaerythritol triacrylate. Produced by Nippon Kayaku Co., Ltd.
IRGACURE 184 (1 g), which is a photoinitiator, produced by Ciba-Geigy Corporation.
Methanol-denatured alcohol (30 g)
Second, the resulting binder was mixed for concentration adjustment with methanol-denatured alcohol in a mixing ratio shown in Table 5.
Thus there was obtained the coating composition, which was found good in dispersion state.
The thus obtained coating composition was made into a conductive coating film in the same way as in Example 1. The conductive coating film was examined for Tt value, haze value, surface resistance, pencil hardness, and cross cut. The results are shown in Table 5.

**Table 5**

| | NW-F102ET (g) | Binder composition (g) | Denatured alcohol (g) | Tt (%) | Haze (%) | Surface resistance (Ω/□) | Pencil hardness | Cross cut |
|---|---|---|---|---|---|---|---|---|
| Example 9 | 1.67 | 0.09 | 3.25 | 97.5 | 0.6 | 8.7×10⁴ | 2H | 100 |
| Example 10 | 2.78 | 0.06 | 2.16 | 94.2 | 0.0 | 4.0×10³ | 2H | 100 |
| Example 11 | 3.89 | 0.04 | 1.07 | 90.9 | 0.0 | 2.2×10³ | H | 100 |

### Examples 12 and 13

First, a UV light-curable binder composition was prepared by mixing from the components listed below.
NW-F101MEK, which is a dispersion in 2-butanone of an intrinsically conductive polymer containing doped polyaniline, with a solid content of 0.9 wt%. Produced by Nissan Chemical Industries Ltd.
ACR-ST-2101 (13.3 g), which is colloidal silica dispersed in tetrahydrofurfuryl acrylate. Produced by Nissan Chemical Industries Ltd.
KAYARAD PET30 (5.7 g), which is pentaerythritol triacrylate. Produced by Nippon Kayaku Co., Ltd.
IRGACURE 184 (1 g), which is a photoinitiator, produced by Ciba-Geigy Corporation.
2-butanone (30 g)
Second, the resulting binder was mixed for concentration adjustment with 2-butanone in a mixing ratio shown in Table 6.
Thus there was obtained the coating composition, which was found good in dispersion state.
The thus obtained coating composition was made into a conductive coating film in the same way as in Example 1. The conductive coating film was examined for Tt value, haze value, surface resistance, pencil hardness, and cross cut. The results are shown in Table 6.

**Table 6**

| | NW-F101MEK (g) | Binder composition (g) | 2-butanone (g) | Tt (%) | Haze (%) | Surface resistance (Ω/□) | Pencil hardness | Cross cut |
|---|---|---|---|---|---|---|---|---|
| Example 12 | 1.67 | 0.09 | 3.25 | 95.5 | 1.4 | 9.2×10⁴ | H | 100 |
| Example 13 | 2.78 | 0.06 | 2.16 | 88.8 | 1.6 | 7.0×10³ | H | 100 |

### Comparative Example 1

First, a UV light-curable binder composition was prepared by mixing from the components listed below.
NW-D102MT, which is a dispersion in methanol of an intrinsically conductive polymer containing doped polyaniline, with a solid content of 0.7 wt%. Produced by Nissan Chemical Industries Ltd.
KAYARAD PET30 (19 g), which is pentaerythritol triacrylate. Produced by Nippon Kayaku Co., Ltd.
IRGACURE 184 (1 g), which is a photoinitiator, produced by Ciba-Geigy Corporation.
Methanol (30 g)
Second, the resulting binder was mixed for concentration adjustment with methanol in a mixing ratio shown in Table 7.
Thus there was obtained the coating composition, which was found good in dispersion state.
The thus obtained coating composition was made into a conductive coating film in the same way as in Example 1. The conductive coating film was examined for Tt value, haze value, surface resistance, pencil hardness, and cross cut. The results are shown in Table 7.

**Table 7**

| | NW-D102MT (g) | Binder composition (g) | Methanol (g) | Tt (%) | Haze (%) | Surface resistance (Ω/□) | Pencil hardness | Cross cut |
|---|---|---|---|---|---|---|---|---|
| Comparative Example 1 | 2.14 | 0.09 | 2.77 | 96.8 | 0.0 | 1.0×10⁵ | HB | 100 |

### Comparative Example 2

First, a UV light-curable binder composition was prepared by mixing from the components listed below.
NW-F102ET, which is a dispersion in methanol-denatured alcohol of an intrinsically conductive polymer containing doped polyaniline, with a solid content of 0.9 wt%. Produced by Nissan Chemical Industries Ltd.
KAYARAD PET30 (19 g), which is pentaerythritol triacrylate. Produced by Nippon Kayaku Co., Ltd.
IRGACURE 184 (1 g), which is a photoinitiator, produced by Ciba-Geigy Corporation.
Methanol-denatured alcohol (30 g)
Second, the resulting binder was mixed for concentration adjustment with methanol in a mixing ratio shown in Table 8.
Thus there was obtained the coating composition, which was found good in dispersion state.
The thus obtained coating composition was made into a conductive coating film in the same way as in Example 1. The conductive coating film was examined for Tt value, haze value, surface resistance, pencil hardness, and cross cut. The results are shown in Table 8.

**Table 8**

| | NW-F102ET (g) | Binder composition (g) | Denatured alcohol (g) | Tt (%) | Haze (%) | Surface resistance (Ω/□) | Pencil hardness | Cross cut |
|---|---|---|---|---|---|---|---|---|
| Comparative Example 2 | 1.67 | 0.09 | 3.25 | 96.6 | 0.5 | 4.2×10⁴ | HB | 100 |

### Comparative Example 3

First, a UV light-curable binder composition was prepared by mixing from the components listed below.
NW-F101MEK, which is a dispersion in 2-butanone of an intrinsically conductive polymer containing doped polyaniline, with a solid content of 1.0 wt%. Produced by Nissan Chemical Industries Ltd.
KAYARAD PET30 (19 g), which is pentaerythritol triacrylate. Produced by Nippon Kayaku Co., Ltd.
IRGACURE 184 (1 g), which is a photoinitiator, produced by Ciba-Geigy Corporation.
2-butanone (30 g)
Second, the resulting binder was mixed for concentration adjustment with 2-butanone in a mixing ratio shown in Table 9.
Thus there was obtained the coating composition, which was found good in dispersion state.
The thus obtained coating composition was made into a conductive coating film in the same way as in Example 1. The conductive coating film was examined for Tt value, haze value, surface resistance, pencil hardness, and cross cut. The results are shown in Table 9.

**Table 9**

| | NW-F101MEK | Binder composition (g) | 2-butanone (g) | Tt (%) | Haze (%) | Surface resistance (Ω/□) | Pencil hardness | Cross cut |
|---|---|---|---|---|---|---|---|---|
| Comparative Example 3 | 1,50 | 0.09 | 3.41 | 97.6 | 7.0 | >1.0×10⁷ | HB | 100 |

## Claims

1. A conductive coating composition which comprises a dispersion of an intrinsically conductive polymer in an organic solvent and a binder, wherein said binder contains colloidal silica in the form of sol in a polymerizable monomer of organic compound.

2. The conductive coating composition as defined in claim 1, wherein said monomer of organic compound is at least one species selected from the group consisting of polymerizable compounds having ethylenic unsaturated bonds, polymerizable compounds having epoxy rings, polymerizable compounds having oxetane rings, and polymerizable compounds having vinyl ether structure.

3. The conductive coating composition as defined in claim 1 or 2, wherein said dispersion in an organic solvent has a water content no more than 1 wt%.

4. The conductive coating composition as defined in any of claims 1 to 3, wherein said intrinsically conductive polymer contains aniline units at the least.

5. The conductive coating composition as defined in any of claims 1 to 4, wherein said intrinsically conductive polymer is polyaniline or a mixture or copolymer of polyaniline and polythiophene.

6. A member which comprises a substrate and a coating film formed thereon from the conductive coating composition defined in any of claims 1 to 5.

7. The member as defined in claim 6, wherein said substrate is one which is made of plastics, rubber, glass, metal, ceramics, or paper.
